Europäisches Patentamt

European Patent Office

Office européen des brevets

(19)

(11) Veröffentlichungsnummer: **0 043 977**
**B1**

(12) # EUROPÄISCHE PATENTSCHRIFT

(45) Veröffentlichungstag der Patentschrift:
22.08.84

(51) Int. Cl.³: **G 03 B 17/26**, G 03 D 13/00

(21) Anmeldenummer: 81105049.1

(22) Anmeldetag: 30.06.81

(54) **Filmkassette zur mechanischen Entnahme eines belichteten Filmstreifens und Verfahren hierzu.**

(30) Priorität: 10.07.80 DE 3026152

(43) Veröffentlichungstag der Anmeldung:
20.01.82 Patentblatt 82/3

(45) Bekanntmachung des Hinweises auf die Patenterteilung:
22.08.84 Patentblatt 84/34

(84) Benannte Vertragsstaaten:
BE CH DE FR GB IT LI

(56) Entgegenhaltungen:
EP - A - 0 014 309

(73) Patentinhaber: **AGFA-GEVAERT Aktiengesellschaft,
D-5090 Leverkusen 1 (DE)**

(72) Erfinder: **Hoffacker, Franz, Dipl.-Ing., Schumannweg 11,
D-4018 Langenfeld (DE)**
Erfinder: **Kovacic, Guido, Schulstrasse 7, D-5463 Unkel
(DE)**
Erfinder: **Lührig, Hermann, Dipl.-Ing.,
Heinrich-von-Kleist-Strasse 12,
D-5090 Leverkusen 1 (DE)**

## Beschreibung

Die vorliegende Erfindung betrifft eine Filmkassette für die mechanische Entnahme mindestens eines belichteten, für die Aufnahme mehrerer Bilder geeigneten, lichtempfindlichen Filmstreifens, die die Form einer lichtundurchlässigen, aus zwei flachen Schalen gebildeten Tasche mit einer senkrecht zur Taschenlänge verlaufenden Öffnung zum Durchtreten des Filmstreifens hat, wobei die flachen Schalen deckungsgleiche, zum gegenseitigen Verbinden, zum Beispiel durch Kleben oder Schweissen dienende Randbereiche aufweisen. Ausserdem wird ein Verfahren zur Entnahme des Filmstreifens angegeben.

Aus der europäischen Patentanmeldung EP 0 014 309 A1 sind flache Filmkassetten in den verschiedensten Ausführungsformen bekannt.

Bei diesen Kassetten ragt der Filmanfang nach der Belichtung noch aus der Kassette heraus. Dieser aus der Kassette herausragende Filmanfang kann ergriffen und einer Verarbeitungsmaschine, z.B. einem Presplicer oder einer Entwicklungsmaschine, zugeführt werden. Soll jedoch, z.B. aus organisatorischen Gründen bei der Filmverarbeitung, der Filmstreifen nicht mit seinem Anfang, sondern mit seinem Ende vorauslaufend der weiteren Verarbeitung zugeführt werden, so muss der aus der Kassette entnommene Film, zunächst gewendet werden.

Bei einer ähnlichen Kassette wurde vorgeschlagen, den Filmstreifen nach der Belichtung ganz in die Kassette einzuschieben. In diesem Falle muss der Filmanfang zunächst manuell, z.B. mit einer Pinzette, aus der Filmkassette herausgezogen und kann erst dann der weiteren, vorzugsweise automatischen Bearbeitung zugeführt werden. Auch hier steht zur weiteren Verarbeitung nur der Filmanfang, der zudem noch manuell aus der Kassette herausgezogen werden muss, zur Verfügung.

Bei den bekannten Kassettenfilmen, z.B. Super-8, Kassette 126 und 110, ist es üblich, die dauerhaft verklebten oder verschweissten Kassetten zur Filmentnahme aufzubrechen. Dieses Verfahren kann bei den hier vorliegenden flachen Filmkassetten nicht angewendet werden, da diese vorzugsweise aus flexiblem, d.h. nicht brechbarem Kunststoff oder auch aus Blech hergestellt werden.

Bei Verwendung eines spröderen Kunststoffes und Anbringen einer Sollbruchstelle würde die Wandstärke der Kassette im Bereich der Sollbruchstelle so gering werden, dass die Kassette nicht mehr lichtdicht wäre.

Da die Filmverarbeitungslabors heutzutage stark automatisiert sind, muss eine Filmkassette automatengerecht gestaltet sein. Ausserdem sollten, da die einzelnen Labors den Arbeitsablauf unterschiedlich organisiert haben, die Filme wahlweise entweder mit dem Anfang oder mit dem Ende voraus der Verarbeitung zugeführt werden können.

Der Erfindung liegt daher die Aufgabe zugrunde, die Filmkassetten der oben beschriebenen Art so zu gestalten, dass die automatische Entnahme der Filme möglich wird, und zwar derart, dass die entnommenen Filme wahlweise sowohl mit dem Anfang als auch mit dem Ende voraus weiterer Verarbeitung zugeführt werden können. Ausserdem soll ein Verfahren für die Entnahme der Filme angegeben werden.

Ausgehend von einer Kassette der einleitend genannten Art, ist diese Aufgabe erfindungsgemäss dadurch gelöst, dass die Kassette im Bereich mindestens einer derjenigen Randbereiche, welche nicht die Filmdurchtrittsöffnung aufweisen, mit wenigstens einer sich über den Filmkanal erhebenden Eingriffskammer für eine Filmentnahmevorrichtung versehen ist, wobei sich die Eingriffskammer sowohl über einen Teil des Filmkanals als auch über einen Teil des Randbereiches der Kassette erstreckt.

In einer Weiterbildung der Filmkassette sind mindestens diejenigen der quer zur Einschubrichtung des Filmstreifens verlaufenden Flanken der Eingriffskammer(n), auf die der Filmstreifen beim Einschieben in die Kassette auftreffen kann, als filmabweisende Schrägflanken ausgebildet.

Zweckmässigerweise sind die Kassettenschalen in dem zur gegenseitigen Verbindung vorgesehenen Randbereich nicht vollflächig miteinander verklebt, verschweisst oder sonstwie verbunden.

Eine bevorzugte Ausführungsform zeichnet sich dadurch aus, dass der zur Verbindung der oberen Halbschale mit der unteren Halbschale der Kassette vorgesehene Randbereich einen an den Filmkanal angrenzenden, unverschweissten Streifen aufweist, dessen Breite mindestens dem Betrag entspricht, um den die Eingriffskammer(n) in den Randbereich hineinragen.

Für Kassetten, die zusätzlich mit einer Hemm- oder Sperreinrichtung zur Verhinderung des Herausrutschens des Filmstreifens versehen sind, ist es vorteilhaft, wenn auf beiden, zur Längsrichtung der Kassette parallelen Seiten dieser Sperrvorrichtung je eine Eingriffskammer angeordnet ist.

Überraschenderweise zeigt es sich, dass mit diesen Ausbildungen der Kassette eine einfache und der Weiterverarbeitung des Filmstreifens angepasste Entnahme des Filmes nach Abtrennen eines Teiles der Kassette ermöglicht wird. Der Film kann leicht mit einfachen Mitteln ohne Beschädigung der Oberfläche aus der Kassette entnommen und einer Weiterverarbeitung zugeführt werden. Es wird so erst eine automatische Verarbeitung der Filmstreifen ermöglicht.

Die Erfindung beinhaltet auch ein Verfahren zur Entnahme eines Filmstreifens aus einer Filmkassette, welches sich dadurch auszeichnet, dass der Randbereich längs wenigstens einer Kante der Kassette abgeschnitten und in die durch das Abschneiden der Kante geöffneten Eingriffskammer ein Filmentnahmemittel eingeführt und der Filmstreifen entnommen wird, nachdem eine gegebenenfalls vorhandene Hemm- oder Sperrvorrichtung für den Filmstreifen gelöst wurde.

Der Filmstreifen kann nach dem Verfahren sowohl von einem Filmentnahmemittel ergriffen und aus der Kassette herausgezogen als auch hinausgeschoben werden.

Eine vorteilhafte Weiterbildung des Verfahrens zeichnet sich dadurch aus, dass nach dem Aufschneiden der Kassette die beiden Halbschalen der Kassette während des Austrittes des Filmstreifens durch Spreizmittel so weit auseinandergespreizt werden, dass der Filmstreifen ungehindert hindurchgeführt werden kann. Hierzu werden zweckmässigerweise Spreizmittel verwendet, die in die Eingriffsöffnung eingreifen und die Kassette von innen her aufspreizen oder aber Vakuumsauger, die die Kassette von aussen her auseinanderziehen.

Für Kassetten mit einer Hemm- und Sperrvorrichtung zur Vermeidung des Herausrutschens des Filmstreifens aus der Kassette ist es vorteilhaft die Hemm- und Sperrvorrichtung durch ein Stanzwerkzeug auszustanzen, so dass der Filmstreifen zur Herausnahme aus der Kassette frei wird. Nach einem weiteren vorteilhaften Verfahren ist es auch möglich, die Kassette so weit aufzuspreizen, dass die Sperrvorrichtung aus Sperrnocke und Vertiefung den Filmstreifen freigibt, so dass dieser ohne Beschädigung automatisch entnommen und weiterverarbeitet werden kann.

Die Erfindung wird anhand von Zeichnungen näher erläutert. Es zeigt

Fig. 1 eine perspektivische Ansicht einer erfindungsgemässen Kassette

Fig. 2 einen Teil der Kassette nach Fig. 1 mit abgeschnittener Kante

Fig. 3 eine perspektivische Teilansicht einer Kassette mit einer Hemm- und Sperrvorrichtung

Fig. 4 einen vergrösserten Querschnitt durch eine Eingriffskammer

Fig. 5 einen Längsschnitt durch eine Eingriffskammer mit einer Einrichtung zur Abtrennung eines Kassettenteiles

Fig. 6 eine schematische Darstellung einer Kassette im zur Filmentnahme gespreizten Zustand mit einer Hemm- und Sperrvorrichtung

Fig. 7 einen teilweisen Längsschnitt durch eine Filmkassette mit Abtrennmesser und einem Stanzwerkzeug zur Entfernung der Hemm- und Sperrvorrichtung

Fig. 8 eine Draufsicht auf eine Kassette mit eingezeichnetem Schweissnahtbereich sowie den möglichen Filmentnahme- und -weiterverarbeitungsrichtungen.

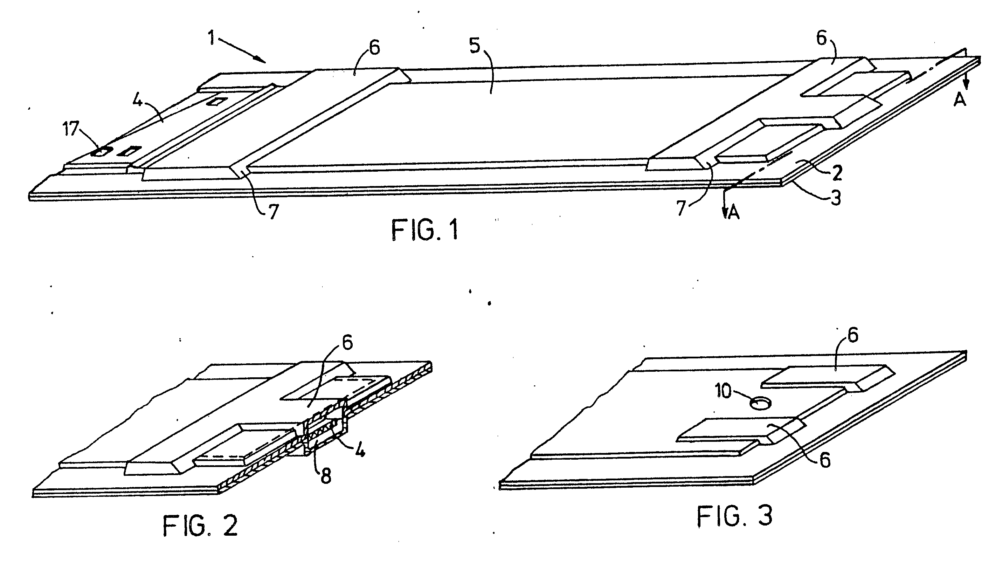

Fig. 1 zeigt eine erfindungsgemäss gestaltete Filmkassette 1. Sie ist hergestellt aus den beiden Halbschalen 2 und 3. Der Anfang des Filmstreifens 4 mit der Perforation 17 ist ausserhalb der Durchtrittsöffnung sichtbar. Dargestellt sind ferner der Filmkanal 5, in dem sich der Filmstreifen 4 frei bewegen kann.

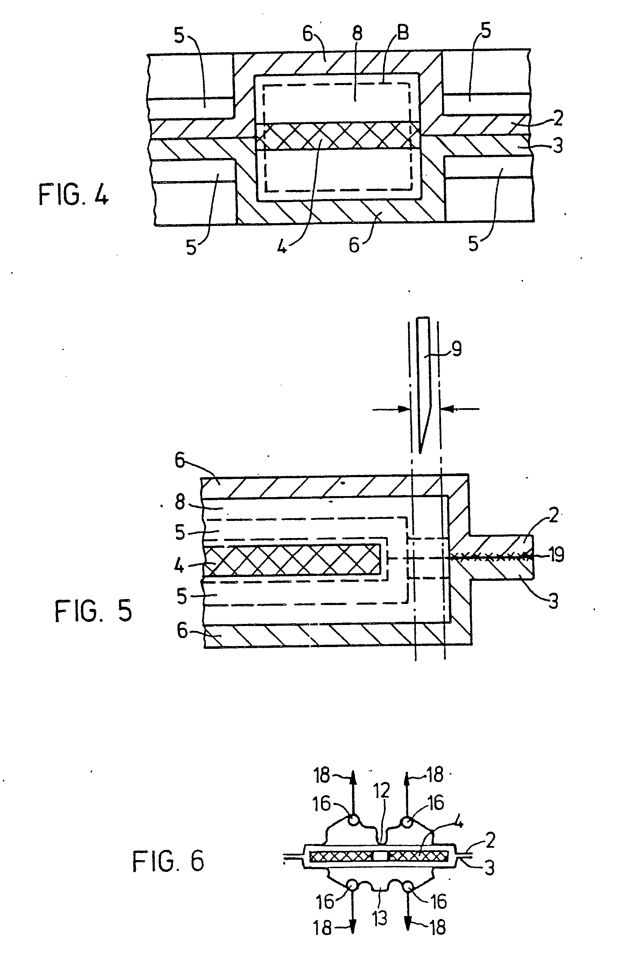

Die für die mechanische Filmentnahme vorgesehenen Eingriffskammern 6 erheben sich über den Filmkanal 5 hinaus. Dadurch entsteht ein Hohlraum, in dessen Innerem sich der Filmstreifen 4 in definierter Lage, vorzugsweise etwa in der Mitte, befindet. Dadurch wird mechanischen Filmentnahmemitteln der Zugriff zum Filmstreifen 4 ermöglicht. Die Eingriffskammern 6 weisen vorteilhaft die filmabweisenden Schrägflanken 7 auf. Diese verhindern bei der Herstellung und in der Kamera das Hängenbleiben des Filmstreifens beim Einschieben in die Kassette 1. Wie in Fig. 1 dargestellt, befinden sich die Eingriffskammern 6 nicht nur im Bereich des Filmkanales 5, sondern ragen um einen gewissen Betrag in den Kassettenrandbereich hinein. Soll nun der Filmstreifen 4 zur Verarbeitung beispielsweise an der der Durchtrittsöffnung gegenüberliegenden Seite der Kassette 1 entnommen werden, so wird zunächst an dieser Seite der Randbereich der Kassette längs der Linie A-A abgeschnitten. Durch dieses Abschneiden entsteht die in Fig. 2 dargestellte Eingriffsöffnung 8, in der auch der Filmstreifen 4 zu erkennen ist. Durch Wahl eines vergrössernden Massstabes werden die Verhältnisse in der Fig. 4 und 5 noch verdeutlicht. Der Filmstreifen 4 liegt, geführt durch den Filmkanal 5, genau in der Mitte der Eingriffsöffnung 8.

Der Bereich, in dem geeignete Filmentnahmemittel und gegebenenfalls auch Mittel zum Spreizen der beiden Halbschalen 2 und 3 in die Eingriffsöffnung 8 eingeführt werden können, ist in Fig. 4 durch die strichlierte Linie B angedeutet.

Das Abschneiden des Kassettenrandes erfolgt in dem Teil der Eingriffskammern 6, der in den Kassettenrandbereich hineinragt. In Fig. 5 ist das durch zwei mit Pfeilen begrenzte, strichpunktierte Linien sowie das Messer 9 verdeutlicht.

Durch die Tatsache, dass die Eingriffskammern 6 in den Randbereich der Kassette hineinragen und dass die Kassette in diesem Teil aufgeschnitten wird, lässt sich beim Aufschneiden der Kassette eine Beschädigung des in ihr befindlichen Filmstreifens 4 zuverlässig verhindern.

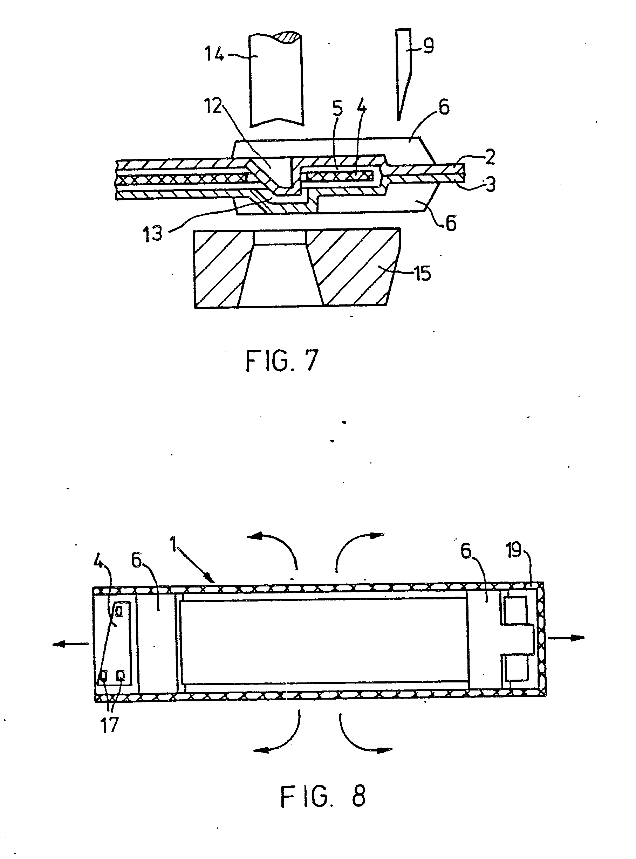

Ein weiteres Merkmal der Filmkassette besteht darin, dass nur der ausserhalb der Eingriffskammer 6 liegende Rand des Kassettenrandbereiches verklebt oder verschweisst ist. Der Bereich der Verklebung oder Verschweissung ist in den Fig. 5 und 8 durch Kreuze bzw. Kreuzschraffur 19 kenntlich gemacht. Dadurch wird erreicht, dass die Kassette nach dem Abschneiden eines Randes entlang ihrer gesamten Länge oder Breite offen ist.

Wie aus Fig. 5 zu ersehen ist, erfolgt das Aufschneiden der Kassette etwa in der Mitte des Teils der Eingriffskammern 6, der in den Kassettenrandbereich hineinragt. Der stehenbleibende Teil des Randbereiches ist zwar nicht verklebt oder verschweisst, stellt andererseits aber noch keine Öffnung dar, aus der der Film ungehindert entnommen werden kann.

Um insbesondere die Gefahr einer Oberflächenbeschädigung der Filmemulsion zu beseitigen, ist es vorteilhaft, die beiden Halbschalen 2, 3 so weit auseinander zu spreizen, dass der Film unbeschädigt entnommen werden kann. Das Spreizen der Halbschalen kann dadurch geschehen, dass mit geeigneten mechanischen Mitteln 16 in die Eingriffskammern 6 eingegriffen und die beiden Halbschalen 2 und 3 in Pfeilrichtung 18 auseinandergedrückt werden (Fig. 6). Es ist jedoch auch möglich, die Halbschalen 2 und 3 von aussen mit Vakuumsaugern zu ergreifen und in Pfeilrichtung 18 auseinanderzuziehen.

Eine weitere vorteilhafte Gestaltung einer Kassette sowie zwei unterschiedliche Verfahren zur Entnahme des belichteten Filmes seien anhand der Fig. 3, 6 und 7 beschrieben. Die Kassette habe eine Hemm- oder Sperrvorrichtung 10 für den belichteten Film und zwar auf der in Längsrichtung verlaufenden Mittellinie des Films. Die Sperrvorrichtung besteht aus dem Nocken 12 und der damit in Wirkverbindung stehenden Vertiefung 13. Auf beiden, zur Längsrichtung der Kassette parallelen Seiten dieser Sperrvorrichtung ist je eine Eingriffskammer 6 angeordnet. Da der Film nach der Belichtung durch die Sperrvorrichtung 10 fest arretiert ist, muss diese Arretierung vor der Entnahme des Filmes gelöst werden. Nach dem durch Fig. 7 verdeutlichten Verfahren geschieht das dadurch, dass die Sperrvorrichtung 12, 13 mit Hilfe des Stempels 14 und der Matrize 15 ausgestanzt und dadurch unwirksam gemacht wird. Zugleich mit dem Ausstanzen der Sperrvorrichtung 12, 13 wird die Kassette mit Hilfe des Messers 9 aufgeschnitten. Durch die nun geöffneten Eingriffskammern 6 ist der Zugriff zum Film mit einer Entnahmevorrichtung möglich. Dieser kann nach Spreizung der Halbschalen 2, 3 entweder aus der durch das Aufschneiden entstandenen Öffnung herausgezogen oder aber auch durch Einführen eines geeigneten, nicht dargestellten Stössels in die Eingriffskammern 6 aus dem Kassettenmaul hinausgeschoben und der weiteren Verarbeitung zugeführt werden.

Eine weitere vorteilhafte Methode zur Filmentnahme aus einer Kassette mit einer Sperrvorrichtung 12, 13 wird durch Fig. 6 verdeutlicht. Bei diesem Verfahren ist es nicht erforderlich, die Sperrvorrichtung 12, 13 auszustanzen. Vielmehr wird die Kassette nach dem Aufschneiden mit Hilfe der in die Eingriffskammern 6 eingeführten Spreizmittel 16 soweit auseinandergespreizt, dass die Sperrvorrichtung 12, 13 den Filmstreifen 4 freigibt und dieser entnommen werden kann.

Die Vielfalt der Filmentnahmemöglichkeiten bei einer derart gestalteten Kassette zeigt Fig. 8. Die Pfeile sollen die wichtigsten Richtungen der Filmentnahme und -weiterverarbeitung andeuten. Die Vielfalt der möglichen Filmentnahmerichtungen kann dann von Bedeutung sein, wenn ein Automat zur Entnahme der belichteten Filme diese gleichzeitig nach unterschiedlichen Filmsorten sortieren soll.

Die Filmkassette und das Verfahren zur Entnahme des Filmstreifens eignen sich auch zur Entnahme von zwei Filmstreifen aus einer Kassette (Doppelkassette).

Bei Doppelkassetten mit an einer Schmalseite der Kassette übereinanderliegenden Austrittsöffnungen wird ein Teil der Kassette an der gegenüberliegenden Schmalseite abgetrennt, so dass zwei Eingriffsöffnungen zur Entnahme beider Filmstreifen entstehen. Es kann auch eine Längskante der Kassette wie oben beschrieben abgetrennt und die zwei Filmstreifen seitlich herausgenommen werden. Diese zuletzt geschilderte Entnahme eignet sich auch für eine Doppelkassette in welcher die Austrittsöffnungen für die Filmstreifen an entgegengesetzten Schmalseiten angeordnet sind.

### Patentansprüche

1. Filmkassette für die mechanische Entnahme mindestens eines belichteten, für die Aufnahme mehrerer Bilder geeigneten, lichtempfindlichen Filmstreifens, die die Form einer lichtundurchlässigen, aus zwei flachen Schalen gebildeten Tasche mit einer senkrecht zur Taschenlänge verlaufenden Öffnung zum Durchtreten des Filmstreifens hat, wobei die flachen Schalen deckungsgleiche, zum gegenseitigen Verbinden, z.B. durch Kleben oder Schweissen dienende Randbereiche aufweisen, dadurch gekennzeichnet, dass die Kassette (1) im Bereich mindestens einer derjenigen Randbereiche, welche nicht die Filmdurchtrittsöffnung aufweisen, mit wenigstens einer sich über den Filmkanal (5) erhebenden Eingriffskammer (6) für eine Filmentnahmevorrichtung versehen ist, wobei sich die Eingriffskammer (6) sowohl über einen Teil des Filmkanales (5) als auch über einen Teil des Randbereiches der Kassette (1) erstreckt.

2. Filmkassette nach Anspruch 1, dadurch gekennzeichnet, dass mindestens diejenigen der quer zur Einschubrichtung des Filmstreifens (4) verlaufenden Flanken der Eingriffskammer(n) (6), auf die der Filmstreifen (4) beim Einschieben in die Kassette (1) auftreffen kann, als filmabweisende Schrägflanken (7) ausgebildet sind.

3. Filmkassette nach Anspruch 1, dadurch gekennzeichnet, dass die Kassettenschalen (2, 3) in dem zur gegenseitigen Verbindung vorgesehenen Randbereich nicht vollflächig miteinander verschweisst oder verbunden sind.

4. Filmkassette nach Anspruch 3, dadurch gekennzeichnet, dass der zur Verbindung der oberen Halbschale (2) mit der unteren Halbschale (3) der Kassette (1) vorgesehene Randbereich einen an den Filmkanal angrenzenden, unverschweissten Streifen aufweist, dessen Breite mindestens dem Betrag entspricht, um den die Eingriffskammer(n) (6) in den Randbereich hineinragen.

5. Filmkassette nach einem der vorhergehenden Ansprüche, die zusätzlich mit einer Hemm- oder Sperreinrichtung zur Verhinderung des Herausrutschen des Filmstreifens versehen ist, dadurch gekennzeichnet, dass auf beiden zur Längsrichtung der Kassette (1) parallelen Seiten dieser Sperrvorrichtung (10) je eine Eingriffskammer (6) angeordnet ist.

6. Verfahren zur Entnahme eines Filmstreifens aus einer Filmkassette nach Patentanspruch 1 oder 5, dadurch gekennzeichnet, dass der Randbereich längs wenigstens einer Kante der Kassette (1) abgeschnitten und in die durch das Abschneiden der Kante geöffneten Eingriffskammer(n) (6) ein Filmentnahmemittel eingeführt und der Filmstreifen (4) entnommen wird, nachdem eine gegebenenfalls vorhandene Hemm- oder Sperrvorrichtung (10) für den Filmstreifen (4) gelöst wurde,

7. Verfahren nach Anspruch 6, dadurch gekennzeichnet, dass die Filmentnahmemittel den Filmstreifen (4) ergreifen und aus der Kassette (1) herausziehen.

8. Verfahren nach Anspruch 6, dadurch gekennzeichnet, dass die Filmentnahmemittel den Filmstreifen (4) aus der Kassette (1) hinausschieben.

9. Verfahren nach Anspruch 6, dadurch gekennzeichnet, dass nach dem Aufschneiden der Kassette (1) die beiden Halbschalen (2, 3) der Kassette (1) während des Austrittes des Filmstreifens (4) durch Spreizmittel (16) soweit auseinandergespreizt werden, dass der Filmstreifen (4) ungehindert hindurchgeführt werden kann.

10. Verfahren nach Anspruch 9, dadurch gekennzeichnet, dass die Spreizmittel (16) in die Eingriffsöffnung (8) eingreifen und die Kassette (1) von innen her aufspreizen.

11. Verfahren nach Anspruch 9, dadurch gekennzeichnet, dass als Spreizmittel Vakuumsauger verwendet werden, die die Kassette (1) von aussen her auseinanderziehen.

12. Verfahren nach Anspruch 6, dadurch gekennzeichnet, dass vor der Entnahme des Filmstreifens eine Hemm- und Sperrvorrichtung (10) ausgestanzt wird.

13. Verfahren nach Anspruch 6, dadurch gekennzeichnet, dass die Kassette (1) soweit aufgespreizt wird, dass eine Sperrvorrichtung (10), bestehend aus Sperrnocken (12) und Vertiefung (13), den Filmstreifen freigibt.

**Claims**

1. A film cassette for the mechanical removal of at least one exposed, light-sensitive film strip suitable for taking several pictures, which cassette has the form of a light-impervious pocket which is formed by two flat shells and has an opening for the passage of the film strip, which opening is perpendicular to the length of the pocket, the flat shells having marginal zones in alignment for the joining together of the shells, for example by glueing or welding, characterised in that the cassette (1) is provided, in the region of at least one of those marginal zones which do not have the opening for the passage of the film, with at least one access chamber (6), raised above the film channel (5), for a film removal device, the access chamber (6) extending over part of the film channel (5) as well as over part of the marginal zone of the cassette (1).

2. A film cassette according to claim 1, characterised in that at least those sides of the access chamber(s) (6) extending transversely to the direction of the insertion of the film strip (4) which are liable to be encountered by the film strip (4) as it is pushed into the cassette (1) are in the form of sloping sides (7) which deflect the film.

3. A film cassette according to claim 1, characterised in that the cassette shells (2, 3) are not welded or bonded together over the whole of the marginal zone provided for joining said shells to each other.

4. A film cassette according to claim 3, characterised in that the marginal zone provided for joining the upper half shell (2) to the lower half shell (3) of the cassette (1) has a strip adjacent to the film channel which is not welded, the width of said strip being at least equal to the amount by which the access chamber(s) (6) extends/extend into the marginal zone.

5. A film cassette according to one of the preceding claims which is in addition provided with a stop or locking device to prevent the film strip from slipping out, characterised in that one access chamber (6) is arranged on each of the two sides of this locking device (10) which are parallel to the longitudinal direction of the cassette (1).

6. A method for the removal of a film strip from a film cassette according to Patent claim 1 or 5, characterised in that the marginal zone is cut off along at least one edge of the cassette (1) and a film removal device is introduced into the access chamber(s) (6) opened by the severing of the edge, and the film strip (4) is removed after releasing any stop or locking device (10) which may be provided for the film strip (4).

7. A method according to claim 6, characterised in that the film removal means grip the film strip (4) and pull it out of the cassette (1).

8. A method according to claim 6, characterised in that the film removal means push the film strip (4) out of the cassette (1).

9. A method according to claim 6, characterised in that after the cassette (1) has been cut open, the two half shells (2, 3) of the cassette (1) are sufficiently spread apart by opening means (16) during the exit of the film strip (4) to enable the film strip (4) to be passed freely through the opening.

10. A method according to claim 9, characterised in that the opening means (16) engage into the access opening (8) and open up the cassette (1) from the inside.

11. A method according to claim 9, characterised in that the opening means used are vacuum suction devices which pull apart the cassette (1) from the outside.

12. A method according to claim 6, characterised in that the stop and locking device (10) is punched out before removal of the film strip.

13. A method according to claim 6, characterised in that the cassette (1) is opened up to such an extent that a locking device (10) consisting of a locking cam (12) and a recess (13) releases the film strip.

**Revendications**

1. Chargeur pour l'extraction mécanique après exposition d'une bande de film photosensible permettant la prise de plusieurs vues, et se présentant sous la forme d'un étui opaque, constitué par deux coques planes avec une ouverture, perpendiculaire à la longueur de l'étui pour le passage de la bande, et des rebords superposables pour l'assemblage par collage ou soudage par exemple, ledit chargeur étant caractérisé en ce qu'au moins une chambre d'engagement (6) est prévue sur au moins un des rebords ne comportant pas l'ouverture de passage du film, est surélevée par rapport au couloir (5) et s'étend à la fois sur une partie du couloir (5) et une partie du rebord du chargeur (1).

2. Chargeur selon la revendication 1, caractérisé en ce qu'au moins les flancs de la ou des chambres d'engagement (6) perpendiculaires au sens d'introduction de la bande de film (4), et avec lesquels ladite bande peut venir en contact lors de son introduction dans le chargeur (1), sont réalisés sous forme de biseaux (7) repoussant le film.

3. Chargeur selon la revendication 1, caractérisé en ce que les coques (2, 3) du chargeur ne sont pas soudées ou reliées sur toute la surface du rebord prévu pour leur assemblage.

4. Chargeur selon la revendication 3, caractérisé en ce que le rebord prévu pour l'assemblage de la coque supérieure (2) et de la coque inférieure (3) du chargeur (1) comporte une réglette non soudée, adjacente au couloir du film et dont la largeur est au moins égale à la distance de pénétration de la ou des chambres d'engagement (6) dans le rebord.

5. Chargeur selon une quelconque des revendications 1 à 4, comportant en outre un dispositif d'arrêt ou de blocage pour interdire la sortie par glissement de la bande de film et caractérisé par une chambre d'engagement (6) sur chacun des deux côtés dudit dispositif (10) parallèles au grand axe du chargeur (1).

6. Procédé d'extraction d'une bande de film hors d'un chargeur selon une des revendications 1 ou 5, caractérisé en ce que le rebord est découpé le long d'un bord au moins du chargeur (1), un moyen d'extraction du film est introduit dans la ou les chambres d'engagement (6) ouvertes par le découpage du bord, puis la bande de film (4) est extraite après libération d'un éventuel dispositif d'arrêt ou de blocage (10) de la bande (4).

7. Procédé selon revendication 6, caractérisé en ce que les moyens d'extraction du film saisissent la bande (4), puis la sortent du chargeur (1).

8. Procédé selon revendication 6, caractérisé en ce que les moyens d'extraction du film font glisser la bande (4) hors du chargeur (1).

9. Procédé selon revendication 6, caractérisé en ce qu'après le découpage du chargeur (1), les deux coques (2, 3) de ce dernier sont écartées par des moyens (16), pendant la sortie de la bande de film (4), de façon à permettre le passage sans obstacle de cette dernière.

10. Procédé selon revendication 9, caractérisé en ce que les moyens d'écartement (16) pénètrent dans l'ouverture d'engagement (8), puis ouvrent le chargeur (1) de l'intérieur.

11. Procédé selon revendication 9, caractérisé par l'emploi comme moyens d'écartement de suceurs qui écartent le chargeur (1) de l'extérieur.

12. Procédé selon revendication 6, caractérisé par le poinçonnage d'un dispositif d'arrêt et de blocage (10) avant l'extraction de la bande de film.

13. Procédé selon revendication 6, caractérisé en ce que le chargeur (1) est ouvert suffisamment pour qu'un dispositif de blocage (10), constitué par un bossage (12) et une échancrure (13), libère la bande de film.

FIG. 1

FIG. 2

FIG. 3

0 043 977

FIG. 4

FIG. 5

FIG. 6

FIG. 7

FIG. 8